# EUROPÄISCHE PATENTSCHRIFT

(11) **EP 0 697 637 B1**
(45) Veröffentlichungstag und Bekanntmachung des Hinweises auf die Patenterteilung: **03.03.1999**
(21) Anmeldenummer: 95112665.5
(22) Anmeldetag: 11.08.1995
(51) Int. Cl.: G05B 9/02

(54) **Verfahren zur Funktionsüberwachung eines Steuer- und Regelsystems**
Method for monitoring the functioning of a controlling and regulating system
Procédé de surveillance du fonctionnement d'un système de commande et de régulation

(30) Priorität: 17.08.1994 DE 4429157
(43) Veröffentlichungstag der Anmeldung: 21.02.1996
(73) Patentinhaber: G. Kromschröder Aktiengesellschaft, D-49074 Osnabrück (DE)
(72) Erfinder: Dalsass, Karl Günther, D-49479 Ibbenbüren (DE); Markus, Heinz-Dieter, D-49504 Lotte (DE)
(74) Vertreter: Harlacher, Mechthild

(56) Entgegenhaltungen:
- GB-A- 2 125 185
- PATENT ABSTRACTS OF JAPAN vol. 6 no. 53 (P-109) ,8.April 1982 & JP-A-56 166509 (MITSUBISHI ELECTRIC CORP.) 21.Dezember 1981,
- PATENT ABSTRACTS OF JAPAN vol. 9 no. 101 (P-353) ,2.Mai 1985 & JP-A-59 226907 (TOSHIBA KK) 20.Dezember 1984,
- PATENT ABSTRACTS OF JAPAN vol. 8 no. 55 (P-260) ,13.März 1984 & JP-A-58 205210 (TOKYO SHIBAURA DENKI K.K.) 30.November 1983,

## Beschreibung

Die Erfindung betriffl ein Verfahren zur Funktionsüberwachung eines Steuer- oder Regelsystems mit wenigstens einem Sensor, der wenigstens eine systemrepräsentative Meßgröße erfaßt und entsprechende Meßwerte liefert, eine die Meßwerte aufnehmende Elektronik und einem von der Elektronik ansteuerbaren Aktor, der auf ein System einwirkt, wobei Testsignale zum Aktor gesendet werden, durch die das System verstellt wird und wobei danach die zugehörigen Meßwerte des Sensors erfaßt und in Abhängigkeit von der Wirkung der Testsignale ein Fehlersignal bzw. eine Fehlermeldung ausgegeben werden.

Eine Funktionsüberwachung ist die Basis für den Betrieb aller zunehmend automatisierten Steuer- und Regelsysteme, da andernfalls Störungen möglicherweise über eine längere Zeitdauer nicht festgestellt werden. Besonders Steuer- und Regelsysteme in sicherheitsrelevanten Anwendungen, wie beispielsweise in elektronischen Feuerungsautomaten müssen kontinuierlich überwacht werden; ein Fehler im Steuer- oder Regelsystem muß dabei auf eine Weise erkannt werden, die selbst fehlersicher ist.

Bisher kann ein Teil der Komponenten eines Steuer- oder Regelsystems so ausgelegt werden, daß interne Fehler- bzw. Umgebungseinflüsse entweder die Funktion des Systems überhaupt nicht beeinträchtigen oder nicht zu kritischen Systemveränderungen führen können. Zu diesen Komponenten, die die Technik "im Griff' hat gehört beispielsweise eine fehlersichere Hardware in der Elektronik.

Andererseits können bei einem anderen Teil der Komponenten, insbesondere bei Sensoren, Fehler und vollständige Funktionsausfälle nicht ausgeschlossen werden. Diese Komponenten werden deshalb bei bekannten sicherheitsrelevanten Systemen zweifach, manchmal auch diversitär vorgesehen. Während der Steuer- oder Regelfunktion erfassen beide Sensoren dann die gleiche system repräsentative Meßgröße, so daß sie im Normalbetrieb die gleichen Meßwerte liefern. Tritt in einem der Sensoren eine Fehlfunktion auf, so wird diese durch einen sofort erkennbaren Unterschied zwischen den Meßwerten der beiden Sensoren unmittelbar angezeigt. Auf diese Weise genügt ein solches Steuer- oder Regelsystem zwar hohen Sicherheitsanforderungen, jedoch ist der Kostenaufwand für die doppelte Auslegung aller Sensoren sehr hoch. Außerdem sind Systeme mit gesonderter Überwachung der Aktoren (Stellglieder) bekannt, da auch deren Funtkion mit unvermeidbaren Fehlern behaftet ist. Es müssen also zusätzlich Kosten für die Überwachung der Aktoren, beispielsweise durch weitere Sensoren, aufgebracht werden. Die dabei anfallenden Gesamtkosten sind beträchtlich.

Aus dem japanischen Patent JP 58205210 ist ein Verfahren zur Funktionsüberwachung eines Steuersystems bekannt, bei dem der Prozeß der Steuerung für eine Testphase zyklisch unterbrochen wird. Ein spezieller Testsignalerzeuger und Vergleicher erzeugt Testsignale, die einen Teil des Steuerungssystems durchlaufen und im Testsignalerzeuger/-vergleicher mit Referenzsignalen verglichen werden. Als Ergebnis des Vergleichs wird ein Schaltsignal herausgegeben. Bei diesem Verfahren wird nicht das gesamte Steuersystem überwacht. Außerdem ist das Verfahren technisch aufwendig.

Ein weiteres Verfahren zur Funktionsüberwachung eines Steuer- oder Regelsystems ist aus dem japanischen Patent JP 56166509 bekannt. Auch bei diesem Verfahren werden Testsignale in einem Bauteil erzeugt, daß nicht für den Prozeß der Steuerung oder Regelung benötigt wird. Die Testsignale werden zusammen mit den normalen Regelsignalen einem Aktor zugeführt, der ein System verstellt. Ein Testsignaldetektor prüft, ob das Testsignal eine Wirkung zeigt. Wenn dies nicht der Fall ist, wird ein Fehlersignal herausgegeben. Mit diesem Verfahren können zwar Aktor und Sensor überwacht werden, allerdings ist auch hier der technische Aufwand relativ groß, weil zusätzlich zu den Komponenten des Steuer- oder Regelkreises zwei zusätzliche Bauteile benötigt werden.

Aufgabe der Erfindung ist es, ein Verfahren zur Funktionsüberwachung eines Steueroder Regelsystems zur Verfügung zu stellen, das den technischen Aufwand verringert und die anfallenden Kosten vergleichsweise gering hält.

Diese Aufgabe wird erfindungsgemäß dadurch gelöst, daß in vorgegebenen Zeitabständen ein Test durchgeführt wird, bei dem der Prozeß der Steuer- oder Regelung vorübergehend unterbrochen ist, daß während des Testes die Elektronik die Testsignale sendet, die zugehörigen Meßwerte des Sensors als Testwerte erfaßt, mit Referenzwerten vergleicht und außerhalb einer vorgegebenen Abweichung der Testwerte von den Referenzwerten das Fehlersignal ausgibt und daß die Referenzwerte und die vorgegebene Abweichung in einem dem Prozeß der Regelung oder Steuerung zeitlich vorgeschalteten Referenzzyklus bestimmt werden.

In dem System kann somit vollständig auf redundante Komponenten verzichtet werden. Besonders vorteilhaft ist dabei eine beträchtliche Senkung des Raumbedarfs, den eine mit dem erfindungsgemäßen Verfahren arbeitende Anlage beansprucht.

Dadurch, daß die Referenzwerte und die vorgegebene Abweichung in einem dem Prozeß der Regelung und Steuerung zeitlich vorgeschalteten Referenzzyklus bestimmt werden, ist es möglich, die Umgebungseinflüsse speziell für jedes Steuer- und Regelsystem mit zu berücksichtigen. Außerdem kann Unterschieden in den Systemkomponenten Rechnung getragen werden, deren Toleranzen in der Herstellung relativ groß ist.

Der Referenzzyklus kann in regelmäßigen zeitlichen Abständen beispielsweise jedes Jahr wiederholt werden, um das System neu zu justieren, d. h. an die aktuellen Betriebsparameter der einzelnen Komponenten anzupassen.

Die Testsignale werden bei diesem Verfahren systemtolerant gewählt, so daß das System nicht in einen kritischen Zustand gerät. In der Regel wird das System unter der Einwirkung der an den Aktor angelegten Testsignale jedoch in deutlichen Abstand zu den für den Normalbetrieb festgelegten Sollwerten gebracht. Die Testsignale können aus einer beliebig langen Signalsequenz bestehen, es kann jedoch auch mit nur einem einzigen Testsignalimpuls gearbeitet werden.

Vorzusweise werden die Testsignale in regelmäßigen Zeitabständen an den Aktor angelegt. Somit kann die Funktion der Anlage kontinuierlich überwacht werden. Die Zeitabstände werden dabei individuell auf das jeweilige Steuer- oder Regelsystem abgestimmt und richten sich insbesondere nach der Sicherheitsstufe, der das System zuzuordnen ist.

In Weiterbildung der Erfindung liegen die Testsignale innerhalb des für den Normalbetreb festgelegten Toleranzbereichs. Auf diese Weise arbeitet das System kontinuierlich ungestört weiter.

Vorteilhafterweise werden die Testsignale derart gewählt, daß die Testwerte innerhalb des Toleranzbereiches abwechselnd oberhalb oder unterhalb der von Sollwerten gebildeten Regelkurve liegen: Die Meßsicherheit wird auf diese Weise weiter erhöht, so daß das Auftreten von Funktionsfehlern sehr früh erkannt werden kann.

Vorteilhafterweise werden beim Referenz zyklus zunächst unter Standardbedingungen die Testsignale an den Aktor angelegt und in Abhängigkeit von den Testsignale die Meßwerte erfaßt und als Referenzwerte gespeichert. Dieser Verfahrensschritt kann zur Erhöhung der Zuverlässigkeit und der Genauigkeit der Referenzwerte mehrmals wiederholt werden. Als Standardbedingungen können entweder Normbedingungen oder bevorzugt die für den Betrieb dieser Anlage typischen Bedingungen eingestellt werden.

In Weiterbildung schlägt die Erfindung vor, daß beim Referenzzyklus das Regel- oder Steuersystem möglicherweise beeinflussende Störgrößen, wie beispielsweise die Temperatur, der Luftdruck und/oder die Luftfeuchtigkeit erfaßt werden, die Störgrößen innerhalb der Grenzen variiert werden, die für die Funktion des Regel- oder Steuersystems unkritisch sind, und die maximale Abweichung der Meßwerte erfaßt und als vorgegebene Abweichung gespeichert werden.

Das Verfahren kann auf diese Weise noch besser auf das jeweilige Steuer- oder Regelsystem abgestimmt werden, da der Fachmann die Möglichkeit hat, beim Referenzzyklus nicht nur alle kritischen Störgrößen mitzuberücksichtigen sondern auch die erlaubte Maximalabweichung der Meßwerte an die speziellen Betriebsbedingungen anzupassen. Auf diese Weise wird wirksam verhindert, daß das System zu früh eine Fehlermeldung ausgibt und ggf. zu früh abschaltet.

Im folgenden wird die Erfindung anhand eines in der Zeichnung dargestellten Ausführungsbeispiels näher beschrieben.

In der Zeichnung zeigen:
- Fig.1: ein Blockschaltbild eines Regelsystems, dessen Funktion mit dem erfindungsgemäßen Verfahren überwacht wird; und
- Fig. 2: ein Zeitdiagramm der Stellgröße und der Meßgröße für das Regelsystem gemäß Fig. 1.

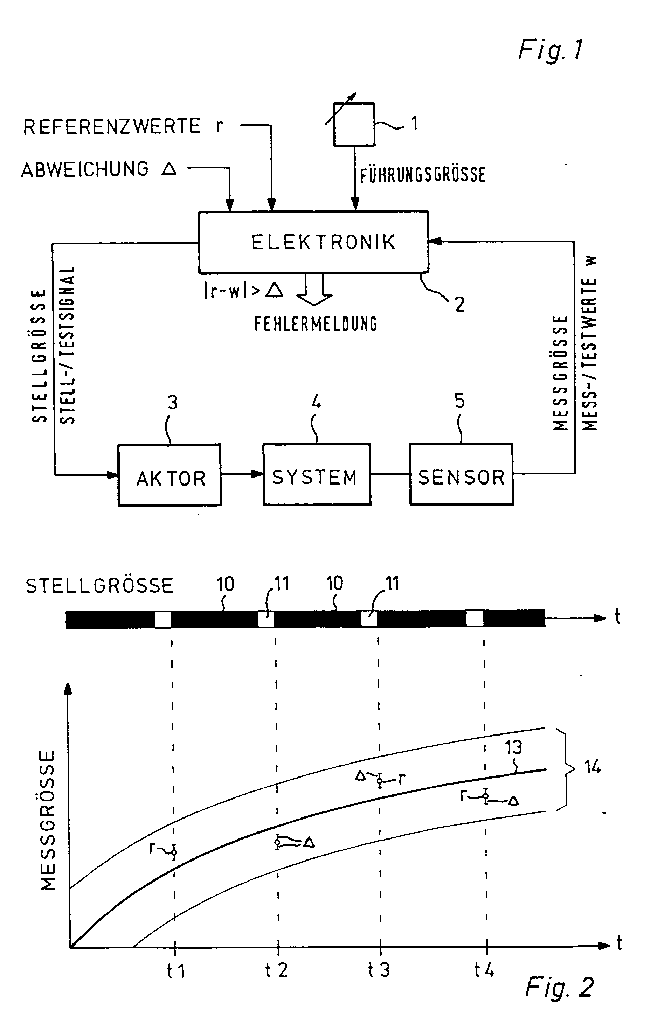

Fig. 1 zeigt ein Blockschaltbild eines Regelsystems, dessen Funktion mit dem erfindungsgemäßen Verfahren überwacht wird. Die einzelnen Konponenten, ein Sollwerteinsteller 1 eine Elektronik 2, ein Aktor bzw. Stellglied 3 ein zu regelndes System bzw. die Regelstrecke 4 und ein Sensor 5 sind bekannt. Im Normalbetrieb gibt der Sollwerteinsteller 1 eine Führungsgröße an die Elektronik und legt zu einer Stellgröße gehörige Stellsignale an den Aktor 3 an. Der Aktor 3 wirkt auf das System 4 ein, wobei von dem Sensor 5 eine systemrepräsentative Meßgröße bzw. Regelgröße erfaßt wird. Der Sensor 5 liefert Meßwerte an die Elektronik, welche die Regelabweichung zwischen Führungsgröße und Meßgröße berechnet und ein entsprechendes Stellsignal ausgibt.

Zur erfindungsgemäßen Überwachung der einzelnen Komponenten des Steuer- oder Regelsystems werden von der Elektronik 2 in regelmäßigen Zeitabständen Testsignale an den Aktor 3 gesendet, welcher unter dem Einfluß dieser Testsignale verstellt wird. Unter Einwirkung des Aktors wird auch das System 4 verstellt, und der Sensor 5 erfaßt zu den Testsignalen gehörige Testwerte w. Diese werden an die Elektronik 2 angelegt und dort mit gespeicherten Referenzwerten r verglichen. Wenn die Testwerte außerhalb einer ebenfalls gespeicherten Abweichung Δ von den Referenzwerten r liegen, wird von der Elektronik 2 eine Fehlermeldung ausgegeben.

Fig. 2 zeigt ein Zeitdiagramm der Stellgröße und der Meßgröße für das Regelsystem gemäß Fig. 1. Die Stellgröße hat im Normalbetrieb den Wert des Stellsignals; und zwar in den Zeitperioden 10. In regelmäßigen Zeitabständen werden Testzyklen 11 durchlaufen, in denen statt der Stellsignale Testsignale an den Aktor 3 angelegt werden. Fig. 2 zeigt außerdem stark vergrößert die Regelkurve 13 (Sollwerte) und den Toleranzbereich 14. In den Testzyklen 11 wird das System verstellt und nach einer an die Trägheit des Systems angepaßten Einschwingphase, am Ende der Testzyklen, wird zu den Zeiten t1, t2... von der Elektronik die Meßgröße als Testwert w erfaßt und mit dem zugehörigen Referenzwert r verglichen. Ist die Differenz zwischen beiden Werten größer als die gespeicherte Abweichung Δ, so wird eine Fehlermeldung ausgegeben. Die Testsignale werden für die Testzyklen vorzugsweise so gewählt, daß die Testwerte innerhalb des Toleranzbereichs 14, jedoch in deutlichem Abstand zu den Sollwerten 13 liegen, bspw. jeweils um 5% über oder unter den Sollwerten. In der Ausführungsform gemäß Fig. 2 werden von der Elektronik derart Testsignale ausgegeben, daß abwechselnd Referenzwerte oberhalb und unterhalb der Regelkurve 13 angesteuert werden. Auf diese Weise wird eine hohe Meßsicherheit erzielt.

Im Rahmen des Erfindungsgedankens sind viele Variationsmöglichkeiten denkbar. Insbesondere können beliebig viele Sensoren und Aktoren verwendet werden. Die Testzyklen können in regelmäßigen Zeitabständen, aber auch variabel gewählt werden. Auch die Referenzwerte, die Einschwingphase und die vorgegebene Abweichung können an die Systemparameter beliebig angepaßt werden.

## Patentansprüche

1. Verfahren zur Funktionsüberwachung eines Steuer- oder Regelsystems mit wenigstens einem Sensor (5), der wenigstens eine system repräsentative Meßgröße erfaßt und entsprechende Meßwerte liefert, einer die Meßwerte aufnehmenden Elektronik (2) und einem von der Elektronik (2) ansteuerbaren Aktor (3), der auf ein System (4) einwirkt, wobei Testsignale zum Aktor (3) gesendet werden, durch die das System (4) verstellt wird und wobei danach die zugehörigen Meßwerte des Sensors (5) erfaßt und in Abhängigkeit von der Wirkung der Testsignale ein Fehlersignal bzw. eine Fehlermeldung ausgegeben werden,
dadurch gekennzeichnet, daß in vorgegebenen Zeitabständen ein Test durchgeführt wird, bei dem der Prozeß der Steuer- oder Regelung vorübergebend unterbrochen ist, daß während des Testes die Elektronik (2) die Testsignale sendet, die zugehörigen Meßwerte des Sensors (5) als Testwerte erfaßt, mit Referenzwerten vergleicht und außerhalb einer vorgegebenen Abweichung der Testwerte von den Referenzwerten das Fehlersignal ausgibt und daß die Referenzwerte und die vorgegebene Abweichung in einem dem Prozeß der Regelung oder Steuerung zeitlich vorgeschalteten Referenzzyklus bestimmt werden.

2. Verfahren nach Anspruch 1,
dadurch gekennzeichnet,
daß die Testsignale innerhalb des für den Normalbetrieb festgelegten Toleranzbereichs liegen.

3. Verfahren nach Anspruch 2,
dadurch gekennzeichnet,
daß die Testsignale derart gewählt werden, daß die Testwerte innerhalb des Toleranzbereiches abwechselnd oberhalb oder unterhalb der von Sollwerten gebildeten Regelkurve liegen.

4. Verfahren nach einem der Ansprüche 1 bis 3,
dadurch gekennzeichnet,
daß beim Referenzzyklus zunächst unter Standardbedingungen die Testsignale an den Aktor (3) angelegt werden und in Abhängigkeit von den Testsignalen die Meßwerte erfaßt und als Referenzwerte gespeichert werden.

5. Verfahren nach einem der Ansprüche 1 bis 4,
dadurch gekennzeichnet,
daß beim Referenzzyklus das Regel- oder Steuersystem möglicherweise beeinflussende Störgrößen, wie beispielsweise die Temperatur, der Luftdruck und/oder die Luftfeuchtigkeit erfaßt werden, die Störgrößen innerhalb der Grenzen variiert werden, die für die Funktion des Regel- oder Steuersystems unkritisch sind und die maximale Abweichung der Meßwerte erfaßt und als vorgegebene Abweichung gespeichert wird.

## Claims

1. Method for monitoring the function of an open or closed-loop control system with at least one sensor (5) which picks up at least one measurand representative of the system and provides corresponding measured values, an electronic system (2) to record the measured values and an actuator (3) which may be controlled by the electronic system (2) and which acts on a system (4), with test signals being sent to the actuator (3) that change the setting of the system (4), and with the associated measured values of the sensor (5) being subsequently picked up and an error signal and/or error message being generated as a function of the effect of the test signal,
characterised in that a test is performed at specified time intervals during which the process of open or closed-loop control is temporarily interrupted, and in that during the test the electronic system (2) transmits the test signals, picks up the associated measured values of the sensor (5) as test values, compares them with reference values and, if outside a specified deviation of the test values from the reference values, generates the error signal, and in that the reference values and the specified deviation are determined in a reference cycle timed to occur before the process of open or closed-loop control.

2. Method according to claim 1,
characterised in that
the test signals are within the tolerance range specified for normal operation.

3. Method according to claim 2,
characterised in that
the test signals are selected so that the test values are within the tolerance range alternately above or below the control curve made up of setpoints.

4. Method according to claims 1 to 3,
characterised in that
during the reference cycle the test signals are first applied on the actuator (3) under standard conditions and the measured values then picked up as a function of the test signals and stored as reference values.

5. Method according to claims 1 to 4,
characterised in that
during the reference cycle, undesired variables such as, for example, the temperature, the ambient pressure and/or the humidity, which may adversely affect the open or closed-loop control system, are picked up, and in that the undesired variables are adjusted within the limits which are non-critical to the functioning of the open or closed-loop control system, and in that the maximum deviation of the measured values is picked up and stored as a specified deviation.

## Revendications

1. Procédé pour la surveillance de la fonction d'un système de commande ou de réglage avec au moins un capteur (5) saisissant au mois une grandeur représentative à mesurer du système et fournissant des valeurs de mesure correspondantes, un élément électronique (2) recevant les valeurs de mesure et un acteur (3) pouvant être amorcé par l'élément électronique (2) et exerçant un effet sur un système (4), à quoi des signaux d'essai sont transmis vers l'acteur (3) provoquant l'ajustage du système (4), et à quoi les valeurs correspondantes de mesure du capteur (5) sont ensuite saisies et un signal d'erreur resp. un message d'erreur est émis en fonction de l'effet des signaux d'essai, caractérisé par le fait qu'un essai est effectué à des intervalles prédéterminés où le processus de commande ou de réglage et temporairement interrompu, que, lors de l'essai, l'élément électronique (2) émet les signaux d'essai, saisit les valeurs correspondantes de mesure du capteur (5) comme valeurs d'essai, les compare avec des valeurs de référence et émet, lorsque les valeurs d'essai se trouve à l'extérieur d'un écart prédéterminé par rapport aux valeurs de référence, le signal d'erreur, et que les valeurs de référence et l'écart prédéterminé sont déterminés dans un cycle de référence précédant dans le temps le processus de réglage ou de commande.

2. Procédé selon la revendication 1, caractérisé par le fait que les signaux d'essai se trouvent à l'intérieur des tolérances admissibles pour le fonctionnement normal.

3. Procédé selon la revendication 2, caractérisé par le fait que les signaux d'essai sont choisis de la sorte que les valeurs d'essai se trouvent, tour à tour, au-dessus ou au-dessous de la courbe de réglage formée par des valeurs de consigne à l'intérieur des tolérances admissibles.

4. Procédé selon l'une des revendications 1 à 3, caractérisé par le fait que, dans le cycle de référence, les signaux d'essai sont d'abord alignés à l'acteur (3) aux conditions standard et les valeurs de mesure sont saisies en fonction des signaux d'essai et mises en mémoire comme valeurs de référence.

5. Procédé selon l'une des revendications 1 à 4, caractérisé par le fait que des grandeurs perturbatrices dans le cycle de référence telles que la température, la pression d'air et/ou l'humidité de l'air, influençant éventuellement le système de réglage ou de commande, sont saisies, que les grandeurs perturbatrices sont variées à l'intérieur des limites n'étant pas critiques pour le fonctionnement du système de réglage ou de commande, et que l'écart maximal des valeurs de mesure est saisie et mise en mémoire comme écart prédéterminé.
